# EUROPÄISCHE PATENTSCHRIFT

(11) **EP 2 233 183 B1**
(45) Veröffentlichungstag und Bekanntmachung des Hinweises auf die Patenterteilung: **17.02.2016**
(21) Anmeldenummer: 10154199.3
(22) Anmeldetag: 22.02.2010
(51) Int. Cl.: B01D 3/00, B01D 3/20, B01D 53/18

(54) **Flüssigkeitsverteiler**
Liquid distributor
Distributeur de liquide

(30) Priorität: 23.03.2009 EP 09155852
(43) Veröffentlichungstag der Anmeldung: 29.09.2010
(73) Patentinhaber: Sulzer Chemtech AG, 8404 Winterthur (CH)
(72) Erfinder: Bachmann, Christian Gottlieb, 8548, Ellikon an der Thur (CH)
(74) Vertreter: Manitz, Finsterwald & Partner GbR

(56) Entgegenhaltungen:
- EP-A- 1 316 345
- WO-A-2007/033960
- US-A1- 2002 079 597

## Beschreibung

Die Erfindung betrifft einen Flüssigkeitsverteiler für eine Trennkolonne, insbesondere für polymerisierende Flüssigkeiten, beispielsweise für eine Rektifikation, Absorption oder anderes thermisches Trennverfahren. Derartige Trennkolonnen können insbesondere als Bodenkolonnen ausgebildet sein oder als Packungskolonnen. Packungskolonnen können Schütttüllkörper oder strukturierte Packungen enthalten, an welchen ein Stoffaustausch zwischen einer Flüssigkeit und einem Gas stattfindet. Ein Flüssigkeitsverteiler ist ein Kanal, der von einem Eintrittsrohr mit Flüssigkeit versorgt wird und der eine Mehrzahl von Öffnungen aufweist, durch welche die Flüssigkeit austritt.

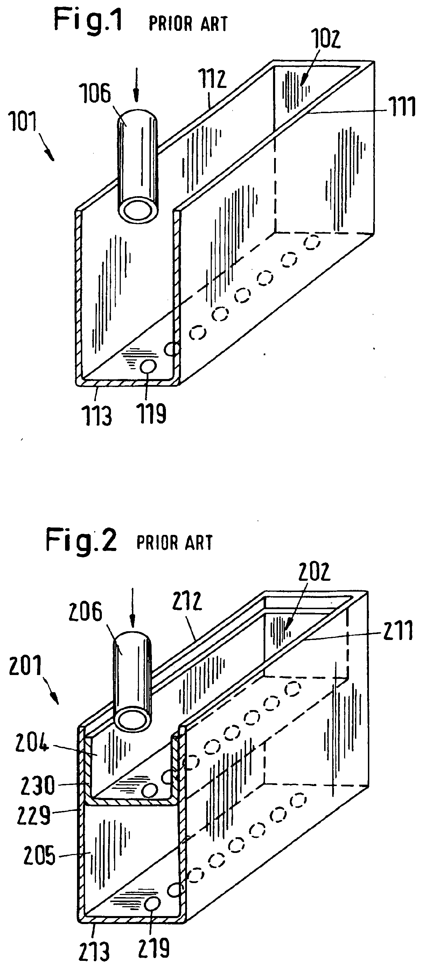

Ein Flüssigkeitsverteiler nach dem Stand der Technik wie in Fig. 1 dargestellt, weist Totzonen auf, in welchen die Flüssigkeit de facto stagniert, deren Strömungsgeschwindigkeit also gegen 0 geht. Dies führt zu einer breiten Verteilung der Strömungsgeschwindigkeit im Flüssigkeitsverteiler. Die Austrittsöffnungen, welche am weitesten entfernt vom Eintrittsrohr liegen, befinden sich in einer derartigen Totzone.

Ein weiterer vorbekannter Flüssigkeitsverteiler enthält im Inneren des Kanals einen weiteren Vorverteilkanal, wie in Fig. 2 dargestellt. Dieser Vorverteilkanal dient zur Vorverteilung der Flüssigkeit im Flüssigkeitsverteiler. Durch diesen Flüssigkeitsverteiler werden Unterschiede in den Strömungsgeschwindigkeiten teilweise ausgeglichen. Auch in diesem Fall nimmt die Strömungsgeschwindigkeit der Flüssigkeit mit zunehmendem Abstand zum Eintrittsrohr ab. Die Ausbildung einer Totzone ist daher in beiden Fällen zu erwarten und zwar im Kanal gemäss Fig. 1 oder im Vorverteilkanal gemäss Fig. 2. Ein derartiger Vorverteilkanal ist beispielsweise auch in der US5061407 offenbart. Die Flüssigkeit, die aus dem Vorverteilkanal abläuft, wird in Bewegung gehalten. Allerdings ist der Flüssigkeitsstand je nach Durchsatz ein anderer. Mit zunehmendem Flüssigkeitsstand wird die Flüssigkeit im Kanal weniger stark in Bewegung versetzt, weil die Flüssigkeit weniger tief fällt und weniger tief in die aufgestaute Flüssigkeit eindringt. Somit wird nur ein oberer Bereich des unteren Kanals in starke Bewegung versetzt, nicht aber die bodennahe Zone, und es kann sich in Bodennähe wiederum eine Totzone ausbilden.

Das Dokument WO2007/033960 zeigt eine Anordnung eines Flüssigkeitsverteilers für zwei nicht mischbare Flüssigkeiten. Um diese beiden Flüssigkeiten zu vermischen, müssen Totzonen vermieden werden, sodass es nicht zur Entmischung der Flüssigkeiten kommt. Allerdings wird in der WO2007/033960 der Ansatz gewählt, die beiden nicht mischbaren Phasen getrennt aus der Verteileranordnung auszubringen. Jede der Phasen verlässt die Kammern getrennt voneinander über in der Trennwand angeordnete Rohre, in denen Öffnungen angebracht sind. Wenn für jede der Phase lokal Totzonen in den Kammern entstehen, ist dies unbeachtlich, da die Phasen, bedingt durch ihre räumliche Trennung voneinander keine Reaktion eingehen können. Diese Lösung eignet sich daher nicht zum Austrag einer polymerisierenden Flüssigkeit, welche nicht aus zwei nicht mischbaren Phasen besteht, sondern eine einzige Phase ausbildet in welcher innerhalb einer bestimmten Zeitdauer eine Polymerisationsreaktion eingeleitet wird.

Für eine polymerisierende Flüssigkeit kann in Totzonen auf Grund der langen Verweilzeit eine spontane Polymerisationsreaktion auftreten, was zur Verfestigung der Flüssigkeit führt und eine Verstopfung der im Bereich der Totzone vorhandenen Öffnungen bewirken kann. Für polymerisierende Flüssigkeiten wird allgemein angenommen, dass zur Vermeidung von Verstopfung von Verteilern durch Polymerisation die Verweilzeit so klein als möglich gehalten werden sollte, also das Betriebsvolumen des Verteilers möglichst klein gehalten werden sollte.

Die US2002/0079597 zeigt in Fig. 7 einen Verteiler mit einer vertikalen Trennwand. Der Flüssigkeitsaustritt erfolgt ähnlich wie in WO2007/033960 über Rohre. Gemäss der US2002/0079597 soll der stationäre Flüssigkeitsgehalt (hold-up) vermindert werden um eine verringerte Anzahl an Verteilerstufen zu erhalten. Der horizontale Flüssigkeitstransport soll verringert werden. Daraus ergeben sich kleinere Kanalbreiten und demzufolge kleinere Flüssigkeitsdurchsätze. Diese Lösung liefert aber ebenfalls keinen Hinweis darauf, ob und gegebenenfalls wie Totzonen vermieden werden können.

In der EP 1 316 345 A1 wird ein Flüssigkeitsverteiler offenbart, der einen ersten und zweiten Kanal aufweist, wobei zwischen dem ersten und zweiten Kanal eine innenliegende Trennwand bzw. ein innenliegendes perforiertes Gitter angeordnet ist, um die Wirkungen von Querströmungen in Richtung der Flüssigkeitsströme zu reduzieren.

Aufgabe der Erfindung ist es, zum genannten Flüssigkeitsverteiler eine Verbesserung zu schaffen, mit der derartige Totzonen vermieden werden können, insbesondere wenn die Verweilzeit nicht verringert werden kann oder sogar die durchschnittliche Verweilzeit im Vergleich zum Stand der Technik vergrössert ist.

Diese Aufgabe wird durch einen Flüssigkeitsverteiler gelöst, der einen Kanal zur Aufnahme einer Flüssigkeit umfasst, der durch eine Trennwand in eine erste Kammer und eine zweite Kammer unterteilt ist, wobei ein Eintrittselement für eine Flüssigkeit in die erste Kammer einmündet, sodass die erste Kammer mit der Flüssigkeit befüllbar ist, wobei die erste Kammer mit der zweiten Kammer über Öffnungen verbunden ist, welche in der Trennwand angebracht sind, sodass die Flüssigkeit von der ersten Kammer über die Öffnungen in der zweiten Kammer verteilbar ist, wobei die erste Kammer neben der zweiten Kammer angeordnet ist. Die Trennwand erstreckt sich in Längsrichtung des Kanals. Unter Längsrichtung wird eine Richtung verstanden, die im wesentlichen der grössten Abmessung des Kanals entspricht. Erfindungsgemäß weist der Kanal einen Boden auf, wobei der Boden des Kanals kleiner ist als die Beruhigungsstrecke der Flüssigkeitsströmung. Die Kanäle sind in der Regel offen und haben eine Kanalbreite, eine Kanalhöhe und eine Kanallänge. In einem dreidimensionalen orthogonalen Koordinatensystem erstreckt sich die Kanallänge im wesentlichen in der x-Richtung, die Kanalbreite im wesentlichen in der y-Richtung und die Kanalhöhe im wesentlichen in der z-Richtung. Die Kanalbreite und die Kanalhöhe sind kleiner als die Kanallänge. Trotz höherer durchschnittlicher Verweilzeit im erfindungsgemässen Verteiler hat sich herausgestellt, dass dieser auf Polymerisation weniger anfällig ist, wenn darauf geachtet wird, dass die Flüssigkeit in Bewegung gehalten wird.

Somit entstehen insbesondere an den Enden der Kanäle, die sich im Bereich der Frontwand und der Rückwand in der Nähe des Bodens des Kanals befinden, keine Totzonen. Die Enden der Kanäle haben vom Eintrittselement die maximale Entfernung, sodass eine Strömungsbewegung, welche durch die durch das Eintrittselement in die erste Kammer eintretende Flüssigkeit verursacht wird, an den Enden nicht mehr wirksam ist. Daher werden die Öffnungen derart angeordnet, dass eine Rückströmung entsteht, die Flüssigkeit also im Gegensatz zum Stand der Technik in Bewegung bleibt.

Die Fläche der Öffnungen in der Trennwand beträgt erfindungsgemäß maximal 30 %. Vorzugsweise beträgt der Fläche der Öffnungen in der Trennwand maximal 10%, besonders bevorzugt maximal 5%. Hierdurch wird die Strömung insbesondere in den wandnahen Bereichen gefördert, ohne dass die Hauptströmung beeinträchtigt wird. Ein im wesentlichen ungestörter Austritt der Flüssigkeit erfolgt somit durch die in der zweiten Kammer am Boden des Kanals angeordneten Austrittsöffnungen. Somit kann durch die geringe, aber gleichmässige Strömungsgeschwindigkeit durch die Öffnungen die Flüssigkeit in wandnahen Bereichen in Bewegung gehalten werden. Eine Stagnation der Flüssigkeit und die damit verbundene Folge der Einleitung einer Polymerisation können hierdurch vermieden werden.

Zudem ist es besonders vorteilhaft, dass durch die Tatsache, dass die erste Kammer neben der zweiten Kammer angeordnet ist, die Flüssigkeitsbewegung unabhängig vom Füllstand der Kammern gewährleistet ist. Durch die Trennwand mit den hierin vorgesehenen Öffnungen wird erreicht, dass sich keine bodennahen Totzonen ausbilden können. Diese Wirkung tritt ein, unabhängig davon, ob die Kammer vollständig, also bis zur Kammerhöhe mit Flüssigkeit befüllt ist, oder nur bis zu einem Bruchteil der Kammerhöhe mit Flüssigkeit befüllt ist.

Hieraus ergibt sich als Vorteil, dass unabhängig von der Beladung des Flüssigkeitsverteilers mit Flüssigkeit gewährleistet ist, dass sich keine Totzonen ausbilden. Das bedeutet, dass sich die Totzonen in dem Flüssigkeitsverteiler gemäss der Erfindung sowohl unter Teillast, als auch unter Vollast vermeiden lassen.

Erfindungsgemäß umfasst die Trennwand zumindest einen vertikalen Abschnitt. Wenn sich Öffnungen im vertikalen Abschnitt befinden, strömt die Flüssigkeit mit einer Strömungsgeschwindigkeit, die eine horizontale Komponente hat, durch diese Öffnungen. Daher trifft die Strömung, welche durch eine Öffnung hindurchgetreten ist, auf die Seitenwand der zweiten Kammer auf. Die Strömung wird durch die Seitenwand des Kanals umgelenkt. Hierdurch wird die Flüssigkeitsströmung auch in wandnahen Bereichen in Bewegung gehalten, sodass eine Ausbildung von Totzonen in der Nähe der Seitenwand vermieden wird. Dieses Auftreffen der Strömung auf der Seitenwand des Kanals ist dadurch begünstigt, dass der Abstand zwischen Trennwand und Seitenwand, also die Kammerbreite, erfindungsgemäß kleiner ist als die Beruhigungsstrecke der Flüssigkeitsströmung. Unter Beruhigungsstrecke soll hierbei der Weg verstanden werden, den ein Flüssigkeitsteilchen zurücklegt, bis die durch den Eintrittsimpuls an der Öffnung aufgeprägte Bewegungsrichtung sich nicht mehr von der mittleren statistischen Bewegung des Flüssigkeitsteilchens in einem Flüssigkeitsvolumen unterscheidet.

Insbesondere kann die Trennwand parallel zu einer Seitenwand des Kanals angeordnet sein. Hierdurch ist die Breite der ersten oder der zweiten Kammer über die gesamte Kanallänge gleich. Somit können über die gesamte Kanallänge ähnliche Strömungsverhältnisse geschaffen werden. Die lokale Verweilzeit der Flüssigkeit ist somit an jedem Ort der ersten oder zweiten Kammer im wesentlichen gleich.

Die Strömungsgeschwindigkeit der Flüssigkeit nimmt in vom Eintrittselement weiter entfernten Bereichen des Kanals ab. In diesem Fall kann die Kanalbreite mit zunehmendem Abstand vom Eintrittselement abnehmen, das heisst der Kanal sich verjüngen. Der Kanal hat somit an der Frontwand oder der Rückwand seine geringste Kanalbreite. Hierdurch kann eine genügend grosse Strömungsgeschwindigkeit im Kanal aufrecht erhalten werden.

Die gesamte Kanalbreite ist so eingestellt, dass eine gegebene Verteilqualität bei einem minimierten Rückhaltevolumen erreicht wird. Die Breite der zweiten Kammer ist so zu bemessen, dass eine maximale Aktivität der Flüssigkeit erreicht wird. Die Kanalbreite beträgt insbesondere mindestens 30 mm aus Montagegründen, sollte aber so gering wie möglich gehalten werden.

Der Kanal weist eine Kanalhöhe auf, die derart gewählt ist, dass der Kanal die gesamte über die mittels der Verteilvorrichtung auf der Querschnittsfläche der Trennkolonne zu verteilende Flüssigkeit bei maximaler Beladung der Trennkolonne aufnehmen und auf eine darunter gelegene Verteilvorrichtung, einen Stoffaustauschboden oder eine Packungslage verteilen kann. Enthält die Verteilvorrichtung mehrere Kanäle, gilt entsprechendes für die Summe der Kanäle. Die erste Kammer weist eine erste Kammerhöhe auf und die zweite Kammer eine zweite Kammerhöhe, wobei die erste Kammerhöhe und die zweite Kammerhöhe mehr als die Hälfte der Kanalhöhe, vorzugsweise mehr als 75% der Kanalhöhe betragen.

Insbesondere ist die erste Kammerhöhe im wesentlichen gleich der zweiten Kammerhöhe. Die Flüssigkeit tritt an vielen Stellen, die gleichmässig über die Oberfläche der Trennwand verteilt sind, gleichzeitig von der ersten Kammer in die zweite Kammer. Die Flüssigkeit befindet sich somit über die gesamte Kanalhöhe in Bewegung.

Der Kanal des Flüssigkeitsverteilers weist eine Kanallänge auf, wobei die Länge der ersten Kammer im wesentlichen der Kanallänge entspricht. Hierdurch ist gewährleistet, dass die Flüssigkeit entlang der gesamten Kanallänge über die Öffnungen in der Trennwand in die zweite Kammer gelangt. Totzonen können entlang der gesamten Kanallänge vermieden werden.

Der Kanal des Flüssigkeitsverteilers weist einen Boden auf, wobei der Boden im wesentlichen horizontal ausgerichtet ist, sodass eine Flüssigkeit in der ersten Kammer entlang der Kanallänge eine unterschiedliche Flüssigkeitshöhe aufweist, gemessen vom Boden des Kanals. Hierdurch wird gewährleistet, dass die Strömungsverhältnisse im gesamten Flüssigkeitsverteiler zu einem Strömungsgefälle führen aber gleichzeitig vermieden wird, dass die Flüssigkeit ungleichmässig durch die Austrittsöffnungen strömt. Der hydrostatische Druck wird tendenziell an jedem Ort des Bodens des Kanals ausgeglichen, sodass die Austrittsgeschwindigkeit der Flüssigkeit durch die Austrittsöffnungen gleich ist. Somit ist die Flüssigkeitsmenge, welche durch jede der Austrittsöffnungen strömt, gleich ausgestaltete Austrittsöffnungen vorausgesetzt, im wesentlichen gleich. Demzufolge kann die Flüssigkeit gleichmässig über die in der Trennkolonne angeordnete Verteilvorrichtung verteilt werden. Die gesamte Querschnittsfläche der Trennkolonne steht somit für Stoffaustausch zur Verfügung, wenn die Verteilvorrichtung Flüssigkeit über die gesamte Querschnittsfläche verteilt. Dies kann sowohl positive Auswirkungen hinsichtlich der Effizienz als auch hinsichtlich der Kapazität der Trennkolonne haben. Insbesondere sind die Öffnungen in der Trennwand derart bemessen, dass ein Gefälle zwischen der ersten Kammer und der zweiten Kammer erhalten bleibt. Daher ist der Flüssigkeitsstand bevorzugt in der ersten Kammer höher als in der zweiten Kammer. Mittels der Öffnungen wird der Flüssigkeitsströmung ein definierter Widerstand entgegengesetzt, durch welchen eine Strömungsgeschwindigkeit in der zweiten Kammer aufrecht erhalten wird.

Der Kanal des Flüssigkeitsverteilers weist eine Kanalbreite auf, wobei die erste Kammer eine Kammerbreite aufweist, die durch den Abstand zwischen der Trennwand und der Seitenwand des Kanals bestimmt ist und die Kammerbreite der ersten Kammer kleiner als die Kanalbreite ist. Weil die Trennwand im wesentlichen vertikal angeordnet ist, entspricht die Eindringtiefe der Flüssigkeit in das von der zweiten Kammer eingeschlossene Volumen der Kammerbreite der zweiten Kammer. Die Flüssigkeit tritt durch die Öffnungen in die zweite Kammer. Hierbei bildet die Flüssigkeit Strahlen aus. Die Strahlen treten aus der Öffnung in die zweite Kammer ein und dringen in das von der zweiten Kammer eingeschlossene Volumen ein, das einen kleinen Abstand zur Seitenwand hat. Der Abstand entspricht der Kammerbreite der zweiten Kammer. So ist sichergestellt, dass die Strahlen die ganze Kammerbreite in Bewegung versetzen. Dies ist beim Zweikanalsystem nach dem Stand der Technik gemäss Fig. 2 nicht bei allen Durchsätzen möglich, das heisst, bei einem Vorverteilkanal, der in einen Kanal eingebaut ist, insbesondere in einem Kanal aufgehängt ist. Das Niveau der Flüssigkeit, also die Höhe der im Kanal befindlichen Flüssigkeit verursacht unterschiedliches Strömungsverhalten, weil der Flüssigkeitsstand mit dem Quadrat des Durchsatzes steigt und somit die Strömungsgeschwindigkeit im Kanal sinkt., bevor sie durch die Öffnungen am Boden des Kanals ausgetragen wird. Bei kleiner Flüssigkeitshöhe wird zwar die Flüssigkeit durch die Öffnungen unmittelbar ausgetragen, aber durch die Differenzen der Strömungsgeschwindigkeit zwischen einem Bereich des Kanals unterhalb des Eintrittselements und einem Bereich des Kanals in der Nähe dessen Frontwand oder Rückwand erfolgt der Austrag ungleichmässig. Eine grosse Flüssigkeitshöhe kann auch aus einem anderen Grund nachteilig sein. Die durch die Öffnungen des Vorverteilkanals in den Kanal gelangende Flüssigkeit vermag nicht, das ganze Volumen in der zweiten Kammer in Bewegung zu versetzen, insbesondere nicht die Flüssigkeit im bodennahen Bereich, wenn die Flüssigkeitshöhe dem Abstand zwischen Boden des Kanals und Boden des Vorverteilkanals entspricht.

Zumindest ein Teil der Öffnungen in der Trennwand kann in einer Reihe angeordnet sein. Durch die Öffnungen in der Trennwand werden turbulente Wirbel gebildet. Simulationen haben ergeben, dass die Wirbelzentren nicht stationär an einem Ort verbleiben. Die Strömung liegt im turbulenten Bereich, das heisst, sie ist gekennzeichnet durch Geschwindigkeitskomponenten die lokal hoch instationär oder fluktuierend sind. Somit baut sich trotz Wirbelzentren keine hohe lokale Verweilzeit auf. In CFD-Simulationen ist die zeitlich gemittelte Strömung gezeigt. Durch eine hohe Zahl der Öffnungen kommt es zur Ausbildung von zahlreichen kleinen Wirbeln. Die zeitlich gemittelten Wirbelzentren der kleinen Wirbel haben eine kleinere lokale Verweilzeit als die eher stationären, grossräumigen Wirbel, wie sie im Stand der Technik auftreten.

Die Öffnungen in der Trennwand können zueinander versetzt angeordnet sein. Wenn die Öffnungen zueinander versetzt sind, ergibt sich insbesondere der Vorteil, dass ein Teil der Öffnungen für die Entlüftung verwendet werden kann. Entlüftung bedeutet hierbei den Austrag von Gas aus der zweiten Kammer.

Die Öffnungen können als Schlitze in der Trennwand ausgebildet sein. Normalerweise ist die Trennwand nicht entlang der ganzen Kammerlänge mit der Seitenwand des Kanals verbunden. Meist ist am oberen Ende ein schmaler Spalt zwischen der Trennwand und der Seitenwand vorhanden, sodass das Gas über diesen Spalt entweichen kann. Sollte dieser Spalt nicht ausreichen, können die Öffnungen insbesondere als Schlitze ausgebildet sein, um die Entlüftung zu gewährleisten.

Die Trennwand kann Öffnungen enthalten, welche an den Boden des Kanals angrenzen. Hierdurch ist gewährleistet, dass Flüssigkeit sich nicht am Boden des Kanals ansammeln kann.

Der Boden und/oder die Seitenwand des Kanals enthalten im Bereich der zweiten Kammer zumindest eine Austrittsöffnung zum Austrag der Flüssigkeit. Wenn eine Mehrzahl von Austrittsöffnungen vorgesehen ist, ermöglichen diese einen gezielten und gleichmässigen Austritt der Flüssigkeit auf ein unterhalb des Bodenelements gelegenes Stoffaustauschelement, wie beispielsweise eine Packung. Das Bodenelement kann in einer Trennkolonne angeordnet sein, auf welchem ein Flüssigkeitsverteiler zur Flüssigkeitsverteilung nach einem der vorhergehenden Ausführungsbeispiele angeordnet ist.

Alternativ dazu kann auch für jedes der Ausführungsbeispiele vorgesehen werden, dass die aus dem Flüssigkeitsverteiler austretende Flüssigkeit in einen Feinverteiler eingespeist wird. Erst durch diesen Feinverteiler wird eine gleichmässige Verteilung der Flüssigkeit über ein nachgeschaltetes, das heisst räumlich unterhalb des Bodenelements angeordnetes Stoffaustuschelement erreicht. Jeder dieser Feinverteiler enthält nur eine geringe Menge Flüssigkeit, die zudem in dauernder Bewegung ist. Daher können allfällige Ruhezonen im Feinverteiler unberücksichtigt bleiben, weil sie im Vergleich zu den Totzonen von vernachlässigbarer Zeitdauer sind.

Besonders vorteilhaft findet der Flüssigkeitsverteiler nach einem der vorhergehenden Ausführungsbeispiele Verwendung für polymerisierende Flüssigkeiten oder für Suspensionen oder Emulsionen, die sich nicht entmischen sollen.

Nachfolgend wird die Erfindung anhand der Zeichnungen erläutert. Es zeigen:
- Fig. 1: einen Flüssigkeitsverteiler gemäss eines ersten Ausführungsbeispiels aus dem Stand der Technik
- Fig. 2: einen Flüssigkeitsverteiler gemäss eines zweiten Ausführungsbeispiels aus dem Stand der Technik
- Fig. 3: einen Schnitt durch ein erstes Ausführungsbeispiel des erfindungsgemässen Flüssigkeitsverteilers
- Fig. 4: einen Schnitt durch ein zweites Ausführungsbeispiel des erfindungsgemässen Flüssigkeitsverteilers
- Fig. 5: einen Schnitt durch einen Flüssigkeitsverteiler gemäss des zweiten Ausführungsbeispiels gemäss Fig. 4
- Fig. 6: eine Ansicht des Flüssigkeitsverteilers gemäss Fig. 5 von oben
- Fig. 7: einen Schnitt durch den Flüssigkeitsverteiler gemäss Fig. 6 entlang der Schnittebene A-A
- Fig. 8: eine Darstellung von Stromlinien in einem Teil der ersten Kammer eines erfindungsgemässen Ausführungsbeispiels
- Fig. 9: eine Darstellung von Stromlinien in einem Teil der zweiten Kammer eines erfindungsgemässen Ausführungsbeispiels
- Fig. 10: eine Darstellung eines Teils eines Kolonnenbodens mit verschiedenen Bauarten von Flüssigkeitsverteilern gemäss der Erfindung

Fig. 1 zeigt einen Flüssigkeitsverteiler gemäss eines ersten Ausführungsbeispiels, wie er aus dem Stand der Technik bekannt ist. Der Flüssigkeitsverteiler 101 umfasst einen Kanal 102 zur Aufnahme einer Flüssigkeit. In den Kanal 102 ragt ein Eintrittselement 106, mittels welchem Flüssigkeit in den Kanal eingebracht werden kann. Die Flüssigkeit sammelt sich in dem Kanal 102 an, bevor sie den Flüssigkeitsverteiler verlässt. Hierzu sind die Austrittsöffnungen 119 am Boden 113 des Kanals 102 angebracht. In dem in dem Kanal 102 befindlichen Flüssigkeitsvolumen gibt esTotzonen in welchen die Flüssigkeit de facto stagniert, also in Ruhe ist. Bedingt durch die Totzonen kommt es zu einer breiten Verteilung der Strömungsgeschwindigkeit im Flüssigkeitsverteiler, das heisst es gibt Orte, in denen die Strömungsgeschwindigkeit gegen null geht und andere Orte, in denen die Strömungsgeschwindigkeit sich nicht wesentlich von der Strömungsgeschwindigkeit im Eintrittselement unterscheidet. Die Austrittsöffnungen, welche am weitesten entfernt vom Eintrittselement 106 liegen, befinden sich in einer derartigen Totzone. Auch an den Seitenwänden 111, 112 des Kanals kann durch die Wandströmung eine Totzone entstehen.

Fig. 2 zeigt einen Flüssigkeitsverteiler gemäss eines zweiten Ausführungsbeispiels aus dem Stand der Technik. Wie in Fig. 1 umfasst der Flüssigkeitsverteiler 201 einen Kanal 202 zur Aufnahme einer Flüssigkeit.

Zusätzlich enthält der Flüssigkeitsverteiler 201 einen weiteren Kanal, den sogenannten Vorverteilkanal 230. Der Vorverteilkanal bildet eine obere Kammer 204, die im Inneren des Kanals 202 angeordnet ist. Der Boden der oberen Kammer 204 dient als Abgrenzung zu einer unteren Kammer 205. Die obere und untere Kammer bilden somit ein Zweikanalsystem aus. In diesem Zweikanalsystem ist es nicht bei allen Durchsätzen möglich, dass die Flüssigkeit in der unteren Kammer 205 in Bewegung bleibt. Wenn die Fallhöhe von der oberen Kammer 204 in die untere Kammer 205 gering ist, befindet sich zwar die Flüssigkeit in Bewegung, welche die Oberfläche ausbildet. Allerdings wird die Bewegung nicht auf tiefere Schichten, insbesondere Schichten, die in der Nähe des Bodens 213 des Kanals liegen, übertragen.

Je höher das Niveau der Flüssigkeit in der unteren Kammer 205 steigt, desto geringer wird die Fallhöhe der Flüssigkeit, die durch die Austrittsöffnungen 229 auf das in der unteren Kammer befindliche Flüssigkeitsvolumen fällt. Demzufolge wird auch die Fallgeschwindigkeit, mit welcher diese Flüssigkeit auf der Flüssigkeitsoberfläche auftritt, verringert. Erreicht das Niveau der Flüssigkeit in der unteren Kammer 205 beinahe den Boden der oberen Kammer 204, wird diese Flüssigkeitsbewegung vernachlässigbar. Das bedeutet, dass die Flüssigkeit sich in einem Ruhezustand befindet, der bis unmittelbar vor dem Austritt durch die Austrittsöffnungen 219 vorliegt. Daher bilden sich in diesem Fall Totzonen aus, insbesondere in der Nähe der Seitenwände 211, 212. Die Verweilzeit, in welcher Totzonen zu Ablagerungen führen, kann je nach Flüssigkeit variieren. Polymerisation wird in Zonen gestartet, wo Teile der Flüssigkeit nicht mehr bewegt werden, insbesondere wenn die Verweilzeit grösser als 60 Sekunden beträgt. Wenn die Polymerisation gestartet ist, wachsen die Ablagerungen auch in Richtung der Öffnungen. Polymerisation ist auch anzutreffen in den Kanten zwischen der Seitenwand und dem Kanalboden. Von da aus kann die Ablagerung in alle Richtungen wachsen, oft auch in Richtung der Öffnungen, die letztendlich verstopfen können.

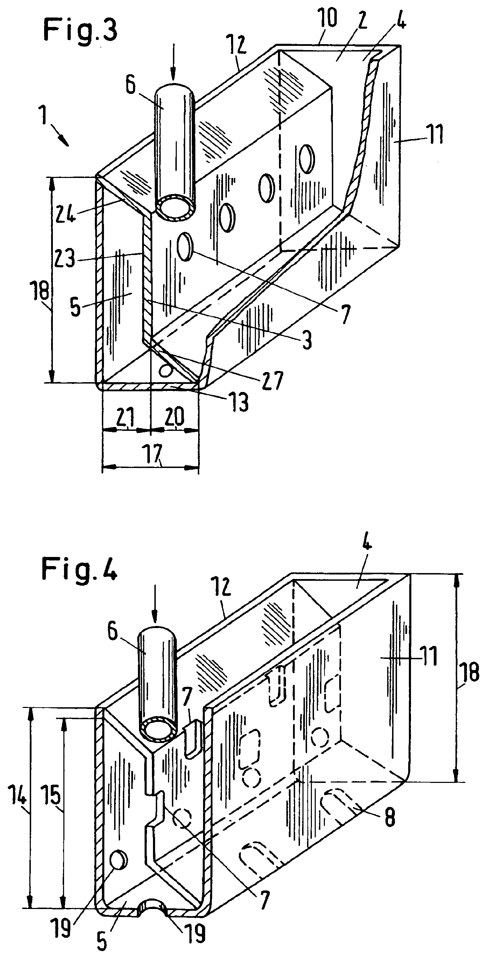

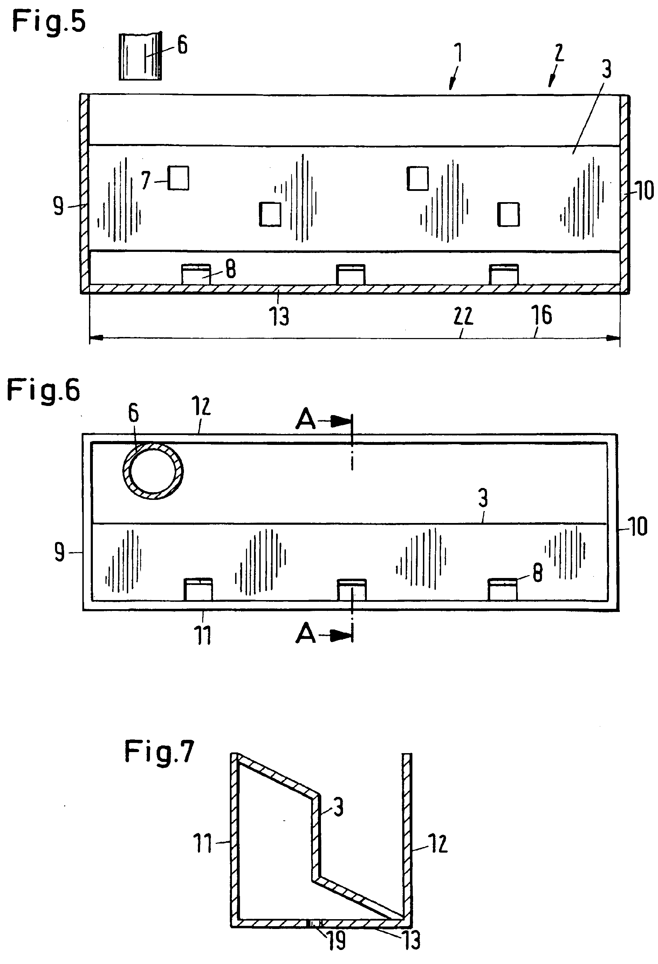

Fig. 3 zeigt ein bevorzugtes Ausführungsbeispiel des erfindungsgemässen Flüssigkeitsverteilers 1. Der Flüssigkeitsverteiler 1 umfasst einen Kanal 2 zur Aufnahme einer Flüssigkeit. Der Kanal 2 ist durch eine Trennwand 3 in eine erste Kammer 4 und eine zweite Kammer 5 unterteilt. Ein Eintrittselement 6 für eine Flüssigkeit, beispielsweise ein Eintrittsrohr, mündet in die erste Kammer 4 ein, sodass die erste Kammer 4 mit der Flüssigkeit befüllbar ist. Die erste Kammer ist mit der zweiten Kammer über Öffnungen 7,8 verbunden, welche in der Trennwand 3 angebracht sind, sodass die Flüssigkeit von der ersten Kammer 4 über die Öffnungen 7,8 in der zweiten Kammer 5 verteilbar ist, wobei die erste Kammer 4 neben der zweiten Kammer 5 angeordnet ist. Selbstverständlich können auch mehr als zwei Kammern nebeneinander angeordnet sein, was insbesondere bei einem Kanal 2 mit grosser Kanalbreite 17 vorteilhaft sein kann. Die Kammerbreite 21 soll in jedem Fall so klein gehalten werden, dass die durch die Öffnungen 7,8 in die zweite Kammer 5 und/ oder in gegebenenfalls vorhandene weitere Kammern entlang der gesamten Kammerbreite 21 in Bewegung bleibt. Die Flüssigkeit, welche auf die Seitenwand 12 auftrifft, die der Öffnung 7,8 im wesentlichen gegenüber liegt, wird somit entlang der Seitenwand 12 umgelenkt. Das bedeutet, dass die Flüssigkeit auch in der Nähe der Seitenwand 12 in Bewegung bleibt, wodurch Totzonen verhindert werden können. Jede der beiden Kammern hat eine Kammerhöhe 14,15, die in den Ausführungsbeispielen gemäss der Fig. 3 bis 9 im wesentlichen der Kanalhöhe entspricht, sowie eine Kammerlänge 22, die der Kanallänge 16 entspricht. Die Kammerbreite 20,21 ist bestimmt durch den Abstand zwischen Trennwand 3 und der Seitenwand 11,12 des Kanals 2 und ist kleiner als die Kanalbreite 17.

Simulationen haben ergeben, dass durch die Öffnungen 7,8 in der Trennwand 3 gewährleistet ist, dass die Flüssigkeit in Bewegung bleibt. Die Bewegung der Flüssigkeit ist im Gegensatz zum Stand der Technik über die ganze Kammerlänge und den Teil der Kammerhöhe verteilt, welcher dem Stand der Flüssigkeit in der Kammer entspricht.

Die durch das Eintrittselement 6 an einer oder mehreren Einspeisestellen in die erste Kammer 4 eingebrachte Flüssigkeit verteilt sich gleichmässig über die erste Kammer. Gleichzeitig tritt die Flüssigkeit in Strahlen durch die Öffnungen 7,8 in der Trennwand 3 von der ersten Kammer 4 in die zweite Kammer 5 ein. Die erste und die zweite Kammer sind nebeneinander angeordnet, somit entspricht die Eindringtiefe der Flüssigkeit in das von der zweiten Kammer eingeschlossene Volumen der Kammerbreite 21 der zweiten Kammer 5.

Wichtig ist, dass die Strahlen aus der ersten Kammer 4 in das von der zweiten Kammer 5 eingeschlossene Volumen eindringen. Die Flüssigkeit bleibt in Bewegung, bis sie die Seitenwand 12 erreicht, wenn die Trennwand 3 einen kleinen Abstand zur Seitenwand 12 hat. Der Abstand entspricht der Kammerbreite 21 der zweiten Kammer 5. Hierdurch ist sichergestellt, dass die Strahlen die Flüssigkeit über die ganze Kammerbreite 21 in Bewegung versetzen.

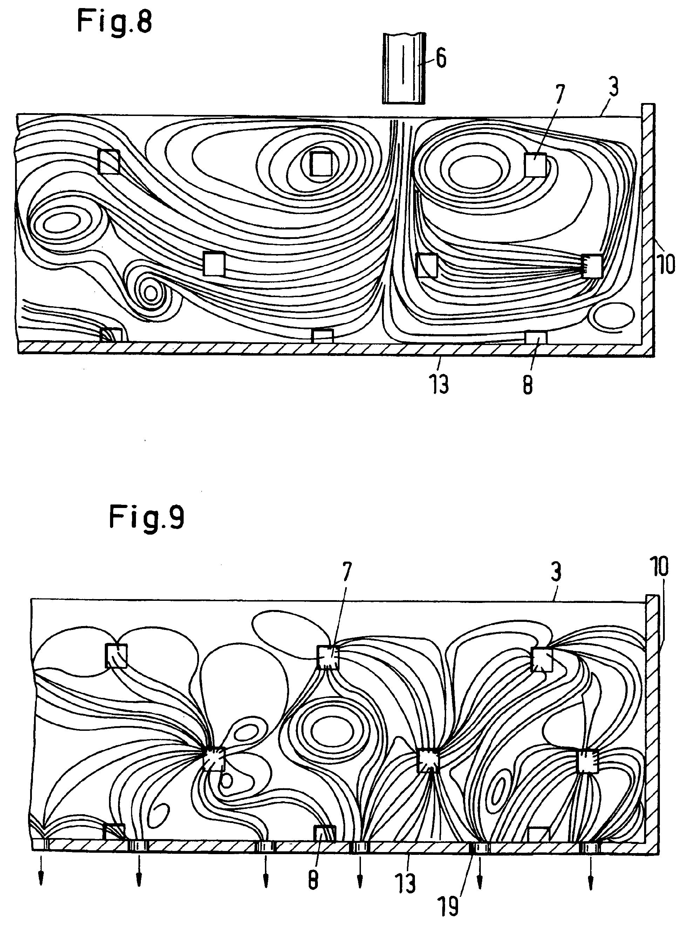

Durch die Öffnungen 7,8 in der Trennwand werden turbulente Wirbel gebildet. Wenn derartige Wirbel gebildet werden, können in deren Umgebung im Prinzip ebenfalls Totzonen entstehen, insbesondere dann, wenn diese Wirbel sich stationär am selben Ort befinden. Simulationen haben gezeigt, dass die Wirbelzentren in einer Anordnung gemäss Fig. 3 oder Fig. 4 nicht stationär an einem Ort sind. Die Strömung ist turbulent, d.h. lokal hoch instationär und fluktuierend. Somit baut sich trotz der Wirbelzentren keine lange lokale Verweilzeit auf. In CFD (computational fluid dynamics) Simulationen ist die zeitlich gemittelte Strömung gezeigt, was anhand der Fig. 8 und der Fig. 9 nachgebildet ist. Wird eine Mehrzahl an Öffnungen 7,8 vorgesehen, kommt es zur Ausbildung von zahlreichen kleinen Wirbeln. Die zeitlich gemittelten Wirbelzentren der kleinen Wirbel haben eine kleinere lokale Verweilzeit als die eher stationären, grossräumigen Wirbel, wie sie im Stand der Technik in der Umgebung der Austrittsöffnungen auftreten. Hieraus folgt, dass durch die Bewegung der Wirbelzentren selbst die Strömung in Bewegung gehalten wird und nicht wie im Stand der Technik in grösserer Entfernung des stationären Wirbels eine Totzone auftritt.

Vorteilhafterweise umfasst die Trennwand 3 zumindest einen vertikalen Abschnitt. Die Trennwand gemäss Fig. 8-10 ist in ihrer Gesamtheit vertikal. Auch bei einer vertikalen Trennwand lassen sich die Vorteile der erfindungsgemässen Lösung darstellen, was in Fig. 8 und Fig. 9 verdeutlicht ist. In Fig. 3 und Fig. 4 ist eine Trennwand mit einem vertikalen Abschnitt 23 dargestellt. Diese Lösung ist besonders vorteilhaft, da für das Eintrittselement 6 die gesamte Kanalbreite 17 zur Verfügung steht. Die Flüssigkeit kann somit über die gesamte Kanalbreite eingebracht werden, was die Festlegung der Lage des Eintrittselements 6 relativ zum Kanal 2 vereinfacht. Vor allem bei Flüssigkeitsverteilern, die eine Kanallänge von mehreren Metern aufweisen, ist die Einhaltung von engen Toleranzen bei schmalen Kammern aufwendig. Befindet sich das Eintrittselement 6 nämlich im Betrieb in geringfügig versetzter Position in bezug auf den Kanal, kann ein Teil der Flüssigkeit ausserhalb des Kanals vorbeiströmen und wird demzufolge nicht vom Flüssigkeitsverteiler erfasst.

Vorteilhafterweise ist der vertikale Abschnitt 23 mit einem geneigten, also in einem Winkel zur Vertikalen angeordneten Abschnitt 24 verbunden. Dieser Abschnitt 24 stützt sich auf der Seitenwand 12 ab. Hierdurch verjüngt sich die erste Kammer 4, das heisst die Kammerbreite nimmt ab, bis der vertikale Abschnitt 23 erreicht ist. Ein weiterer Vorteil dieser Anordnung ist dadurch bedingt, dass die Trennwand in einer formstabilen Position im Kanal gehalten werden kann.

Hierzu kann die Trennwand im Anschluss an den vertikalen Abschnitt 23 einen weiteren geneigten Abschnitt 27 aufweisen, der sich in der von der Seitenwand und dem Boden gebildeten Kante abstützt.

Wenn sich Öffnungen 7, 8 im vertikalen Abschnitt 23 befinden, strömt die Flüssigkeit mit einer Strömungsgeschwindigkeit, die eine horizontale Komponente hat, durch diese Öffnungen. Daher trifft die Strömung, welche durch eine Öffnung hindurchgetreten ist, auf die Seitenwand 12 der zweiten Kammer 5 auf. Die Strömung wird an der Seitenwand 12 der Kammer 5 umgelenkt. Hierdurch wird die Flüssigkeitsströmung auch in wandnahen Bereichen in Bewegung gehalten, sodass eine Ausbildung von Totzonen im Randbereich vermieden wird.

Insbesondere kann die Trennwand 3 parallel zu einer Seitenwand 11,12 des Kanals angeordnet sein. Hierdurch ist die Breite der ersten oder der zweiten Kammer über die gesamte Kanallänge gleich. Somit können über die gesamte Kanallänge ähnliche Strömungsverhältnisse geschaffen werden. Die mittlere Verweilzeit der Flüssigkeit ist somit an jedem Ort der ersten oder zweiten Kammer gleich und die maximale Verweilzeit so gering, dass sich keine Totzonen ausbilden.

Der Kanal 2 weist eine Kanalhöhe 18 auf, die derart gewählt ist, dass der Kanal die gesamte über das Bodenelement 26 der Trennkolonne 25 zu verteilende Flüssigkeit bei maximaler Beladung der Trennkolonne aufnehmen und auf ein darunter gelegenes Bodenelement oder eine Packungslage verteilen kann. Sind mehrere Kanäle 2 auf dem Bodenelement vorhanden, gilt entsprechendes für die Summe der Kanäle. Die Kanalhöhe 18 muss um so grösser gewählt werden, je stärker die Beladung der Trennkolonne schwanken kann. Schwankungen der Flüssigkeitsmenge im Betriebsbereich der Trennkolonne können durch den Flüssigkeitsverteiler ausgeglichen werden.

Die durch das Eintrittselement 6 eintretende Flüssigkeit wird im Kanal auf die erste Kammer 4 verteilt. Die erste Kammer 4 weist eine erste Kammerhöhe 14 auf und die zweite Kammer 5 eine zweite Kammerhöhe 15, wobei die erste Kammerhöhe 14 und die zweite Kammerhöhe 15 mehr als die Hälfte der Kanalhöhe 18, vorzugsweise mehr als 75% der Kanalhöhe 18 betragen. Würde eine der ersten oder zweiten Kammerhöhen geringer ausgewählt werden, könnte es bei der Wahl einer oben offenen Kammer, wie in Fig. 8 bis 10 gezeigt, zu unerwünschten Überschwappen der Flüssigkeit über die obere Kante der Trennwand 3 kommen oder bei zu grosser Beladung des Bodenelements 26 mit Flüssigkeit beide Kammern geflutet werden. In diesem Fall würde der Vorteil eines sequentiellen Verlaufs der Strömung von der ersten Kammer 11 durch die Öffnungen in der Trennwand 3 in die zweite Kammer 12 zunichte gemacht.

Insbesondere ist die erste Kammerhöhe 14 im wesentlichen gleich der zweiten Kammerhöhe 15. Nach dieser bevorzugten Variante wird die Kanalhöhe 18 vollständig zur Erzeugung einer Bewegung in der zu verteilenden Flüssigkeit genutzt. Die Flüssigkeit tritt durch die Öffnungen, die gleichmässig über die Oberfläche der Trennwand 3 verteilt sind, gleichzeitig von der ersten Kammer 4 in die zweite Kammer 5. Die Flüssigkeit befindet sich somit über die gesamte Kanalhöhe 18 in Bewegung.

Der Kanal 2 des Flüssigkeitsverteilers 1 weist eine Kanallänge 16 auf, wobei die Kammerlänge 22 der ersten Kammer 4 sowie die Kammerlänge der zweiten Kammer 5 im wesentlichen der Kanallänge entsprechen. Die Kanallänge 16 erstreckt sich von der Innenfläche der Frontwand 9 zur Innenfläche der Rückwand 10. Hierdurch ist gewährleistet, dass die Flüssigkeit entlang der gesamten Kanallänge 22 über die Öffnungen 8,9 in der Trennwand 3 von der ersten Kammer 4 in die zweite Kammer 5 gelangt. Totzonen können entlang der gesamten Kanallänge vermieden werden, da die zeitlich gemittelten Wirbelzentren der entstehenden kleinen Wirbel eine kleinere Verweilzeit zur Folge haben, als die eher stationären, grossräumigen Wirbel, wie sie bei Lösungen gemäss Fig. 1 oder Fig. 2 entstehen.

Der Kanal 2 des Flüssigkeitsverteilers weist einen Boden 13 auf, wobei der Boden 13 horizontal ausgerichtet ist, sodass eine in der ersten Kammer befindliche Flüssigkeit entlang der Kanallänge 16 eine im wesentlichen gleiche Flüssigkeitshöhe aufweist, gemessen vom Boden 13 des Kanals. Hierdurch wird gewährleistet, dass die Strömungsverhältnisse im gesamten Flüssigkeitsverteiler gleich sind. Zugleich wird vermieden, dass die Flüssigkeit ungleichmässig durch die Austrittsöffnungen 19 strömt. Der hydrostatische Druck ist an jedem Ort des Bodens 13 des Kanals gleich, sodass die Austrittsgeschwindigkeit der Flüssigkeit durch die Austrittsöffnungen 19 gleich ist. Somit ist die Flüssigkeitsmenge, welche durch jede der Austrittsöffnungen 19 strömt im wesentlichen gleich. Demzufolge kann die Flüssigkeit gleichmässig über das Bodenelement 26 der Trennkolonne 25 verteilt werden. Die gesamte Querschnittsfläche der Trennkolonne steht somit für Stoffaustausch zur Verfügung. Dies kann sowohl positive Auswirkungen hinsichtlich der Effizienz als auch der Kapazität der Trennkolonne haben.

Der Kanal 2 des Flüssigkeitsverteilers weist eine Kanalbreite 17 auf, wobei die erste Kammer 4 eine Kammerbreite 20 aufweist, die durch den Abstand zwischen der Trennwand 3 und der Seitenwand 11 des Kanals bestimmt ist und die Kammerbreite 20 der ersten Kammer 4 kleiner als die Kanalbreite 17 ist. Weil die Trennwand 3 bevorzugt im wesentlichen vertikal angeordnet ist oder zumindest einen vertikalen Abschnitt 23 umfasst, entspricht die Eindringtiefe der Flüssigkeit in das von der zweiten Kammer 5 eingeschlossene Volumen der Kammerbreite 21 der zweiten Kammer 5. Die Flüssigkeit tritt durch die Öffnungen 7,8 in die zweite Kammer. Hierbei bildet die Flüssigkeit Strahlen aus. Die Strahlen treten aus der Öffnung 7,8 in die zweite Kammer 5 ein und dringen in das von der zweiten Kammer 5 eingeschlossene Volumen ein. Die Trennwand 3 hat einen kleinen Abstand zur Seitenwand 12. Der Abstand entspricht der Kammerbreite 21 der zweiten Kammer 5. So ist sichergestellt, dass die Strahlen die Strömung längs der gesamten Kammerbreite 21 in Bewegung versetzen, mit den vorhin beschriebenen vorteilhaften Auswirkungen.

Die Öffnungen 7,8 in der Trennwand 3 können zueinander versetzt angeordnet sein.

Die Öffnungen 7,8 können als Schlitze in der Trennwand 3 ausgebildet sein.

Die Trennwand 3 kann Öffnungen 8 enthalten, welche an den Boden 13 des Kanals 2 angrenzen. Hierdurch ist gewährleistet, dass Flüssigkeit sich nicht am Boden des Kanals ansammeln kann.

Der Boden 13 und/oder die Seitenwand 12 des Kanals 2 enthalten im Bereich der zweiten Kammer 5 Öffnungen 19 zum Austrag der Flüssigkeit. Die Öffnungen 19 ermöglichen einen gezielten und gleichmässigen Austritt der Flüssigkeit auf ein unterhalb des Bodenelements 26 gelegenes Stoffaustauschelement, wie beispielsweise einer Packung.

Das Bodenelement 26 ist vorteilhafterweise in einer Trennkolonne 25 angeordnet. Eine derartige Trennkolonne kann für einen Stoffaustausch verwendet werden, beispielsweise für eine Absorptions- oder Destillationskolonne. Ein Flüssigkeitsverteiler zur Flüssigkeitsverteilung nach einem der vorhergehenden Ausführungsbeispiele wird verwendet, um die von einem Zulauf oder einem Sammler zu dem Eintrittselement gelangende und vom Eintrittselement 6 in den Kanal 2 kommende Flüssigkeit auf Feinverteiler vorzuverteilen. Die mittels des Flüssigkeitsverteilers auf die Feinverteiler vorverteilte Flüssigkeit wird als Film oder als Tröpfchen von den Feinverteilern auf ein unterhalb derselben gelegenes Stoffaustauschelement, wie beispielsweise eine Packung verteilt.

Besonders vorteilhaft findet der Flüssigkeitsverteiler nach einem der vorhergehenden Ausführungsbeispiele Verwendung für polymerisierende Flüssigkeiten. Bei Verwendung einer polymerisierenden Flüssigkeit ergibt sich als zusätzlicher Vorteil, dass eine Polymerisation wirksam verhindert werden kann, weil die Flüssigkeit in Bewegung bleibt, bis sie den Verteiler durch die Öffnungen verlässt.

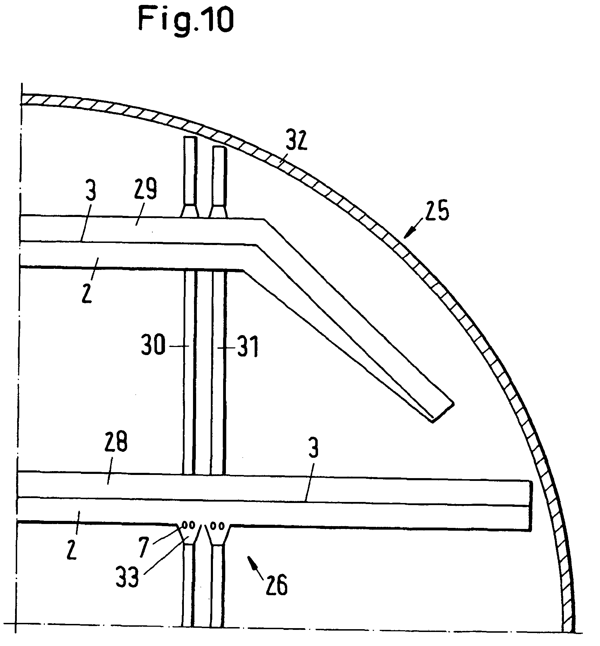

Eine Verteilvorrichtung 26 gemäss Fig. 10 enthält einen ersten Hauptkanal 28, einen zweiten Hauptkanal 29 sowie darunter liegende Armkanäle 30, 31. Von der Verteilvorrichtung 26 ist nur ein Teil gezeigt. Die Verteilvorrichtung 26 ist in einer Trennkolonne angeordnet. Ein Sektor der Kolonnenwand 32 ist ebenfalls im Schnitt gezeigt. Die Blickrichtung in Fig. 10 ist von oben, das heisst in der Hauptströmungsrichtung der Flüssigkeit durch die Trennkolonne. Die Flüssigkeit wird über an dem ersten Hauptkanal 28 angebrachte Öffnungen 7 in den Armkanal eingeleitet. Hierzu kann ein Führungsorgan 33, wie es in EP 1 260 257 B1 offenbart ist, zum Einsatz kommen. Die Armkanäle 30, 31 können auch seitlich aus dem Hauptkanal 28, 29 herausragen. Armkanäle 30, 31 verteilen die Flüssigkeit auf ein unter der Verteilvorrichtung 26 angeordnetes Stoffaustauschelement, insbesondere eine Packung. In jedem der ersten oder zweiten Hauptkänale 28, 29 kann ein Vorverteilkanal angeordnet sein. Der Vorverteilkanal lässt sich leicht aus dem Hauptkanal herausnehmen. Anstelle des Vorverteilkanals können ein Flüssigkeitsverteiler, wie in Zusammenhang mit Fig. 3 bis Fig. 9 gezeigt, verwendet werden.

Sowohl der Hauptkanal 28, 29 als auch der Armkanal 30, 31 können einen Flüssigkeitsverteiler 1 nach einem der vorhergehenden Ausführungsbeispiele im Hauptkanal 28, 29 und/oder Armkanal 30, 31 enthalten. Schematisch ist im ersten und zweiten Hauptkanal 28, 29 ein Kanal 2 gezeigt, der durch eine Trennwand 3 in der Längsrichtung geteilt ist.

In der Darstellung gemäss Fig. 10 werden zwei Hauptkanäle 28, 29 gezeigt. Einer davon verjüngt sich, was vorteilhaft ist, wenn die Flüssigkeitsgeschwindigkeit ansonsten zu stark abnehmen würde. Es werden nur zwei Armkanäle 30, 31 gezeigt, allerdings kann eine beliebige Anzahl vorgesehen sein, um die Flüssigkeit aus dem oder den Hauptkanälen gleichmässig auf das unterhalb der Verteilvorrichtung 1 angeordnete Stoffaustauschelement zu verteilen.

## Patentansprüche

1. Flüssigkeitsverteiler (1), umfassend einen Kanal (2) zur Aufnahme einer Flüssigkeit, der durch eine Trennwand (3) in eine erste Kammer (4) und eine zweite Kammer (5) unterteilt ist, wobei ein Eintrittselement (6) für eine Flüssigkeit in die erste Kammer (4) einmündet, sodass die erste Kammer (4) mit der Flüssigkeit befüllbar ist, wobei die erste Kammer (4) mit der zweiten Kammer (5) über Öffnungen (7,8) verbunden ist, welche in der Trennwand (3) angebracht sind, sodass die Flüssigkeit von der ersten Kammer (4) über die Öffnungen (7) in der zweiten Kammer (5) verteilbar ist, wobei die erste Kammer (4) neben der zweiten Kammer (5) angeordnet ist und sich die Trennwand (3) in Längsrichtung des Kanals (2) erstreckt, wobei der Kanal (2) einen Boden (13) aufweist, wobei der Boden (13) des Kanals (2) im Bereich der zweiten Kammer (5) Austrittsöffnungen (19) zum Austrag der Flüssigkeit enthält, **dadurch gekennzeichnet, dass** die Fläche der Öffnungen (7, 8) in der Trennwand (3) maximal 30 % beträgt, wobei die Trennwand (3) zumindest einen vertikalen Abschnitt umfasst, und der Kanal (2) eine Kanalbreite (17) aufweist, wobei die erste Kammer (4) eine Kammerbreite (20) aufweist, die durch den Abstand zwischen der Trennwand (3) und der Seitenwand (11) des Kanals (2) bestimmt ist und die Kammerbreite (20) der ersten Kammer (4) kleiner als die Kanalbreite (17) ist, wobei die Kammerbreite (20) kleiner ist als die Beruhigungsstrecke der Flüssigkeitsströmung ist.

2. Flüssigkeitsverteiler nach Anspruch 1, wobei die Fläche der Öffnungen (7, 8) in der Trennwand (3) maximal 10% beträgt, besonders bevorzugt maximal 5% beträgt.

3. Flüssigkeitsverteiler nach einem der vorhergehenden Ansprüche, wobei die Trennwand (3) zumindest einen vertikalen Abschnitt umfasst und die Trennwand (3) parallel zu einer Seitenwand (11, 12) des Kanals (2) ist.

4. Flüssigkeitsverteiler nach einem der vorhergehenden Ansprüche, wobei der Kanal (2) eine Kanalhöhe (18) aufweist, wobei die erste Kammer (4) eine erste Kammerhöhe (14) und die zweite Kammer (5) eine zweite Kammerhöhe (15) aufweisen, wobei die erste Kammerhöhe (14) und die zweite Kammerhöhe (15) mehr als die Hälfte der Kanalhöhe (18), vorzugsweise mehr als 75% der Kanalhöhe (18) betragen.

5. Flüssigkeitsverteiler nach einem der Ansprüche 3 oder 4, wobei die erste Kammerhöhe (14) im Wesentlichen gleich der zweiten Kammerhöhe (15) ist.

6. Flüssigkeitsverteiler nach einem der vorhergehenden Ansprüche, wobei der Kanal (2) eine Kanallänge (16) aufweist, wobei die erste Kammer (4) sich im Wesentlichen entlang der Kanallänge (16) erstreckt.

7. Flüssigkeitsverteiler nach einem der vorhergehenden Ansprüche, wobei zumindest ein Teil der Öffnungen (7,8) in einer Reihe oder zueinander versetzt angeordnet sind.

8. Flüssigkeitsverteiler nach einem der vorhergehenden Ansprüche, wobei die Öffnungen (7,8) als Schlitze in der Trennwand (3) ausgebildet sind.

9. Flüssigkeitsverteiler nach einem der Ansprüche 7 bis 8, wobei die Trennwand (3) Öffnungen (8) enthält, welche an einen Boden (13) des Kanals (2) angrenzen.

10. Flüssigkeitsverteiler nach einem der Ansprüche 7 bis 9, wobei die Seitenwand (12) des Kanals (2) im Bereich der zweiten Kammer (5) Austrittsöffnungen (19) zum Austrag der Flüssigkeit enthält.

11. Verteilvorrichtung umfassend einen Hauptkanal (28, 29) und einen Armkanal (30, 31), wobei ein Flüssigkeitsverteiler (1) nach einem der
vorhergehenden Ansprüche in dem Hauptkanal (28, 29) und/oder Armkanal (30, 31) angeordnet ist.

12. Trennkolonne (25) umfassend eine Verteilvorrichtung (26), auf welcher ein Flüssigkeitsverteiler (1) nach einem der vorhergehenden Ansprüche angeordnet ist.

13. Verwendung eines Flüssigkeitsverteilers (1) nach einem der vorhergehenden Ansprüche 1 bis 10 für polymerisierende Flüssigkeiten oder für Suspensionen oder Emulsionen, die sich nicht entmischen sollen.

## Claims

1. A liquid distributor (1), comprising a channel (2) for the reception of a liquid, which is divided by a dividing wall (3) into a first chamber (4) and into a second chamber (5), wherein an inlet element (6) for a liquid opens into the first chamber (4) so that the first chamber (4) can be filled with the liquid, with the first chamber (4) being connected to the second chamber (5) via openings (7, 8) which are applied in the dividing wall (3) so that the liquid can be distributed from the first chamber (4) via the openings (7) into the second chamber (5), wherein the first chamber (4) is arranged next to the second chamber (5) and the dividing wall (3) extends in the longitudinal direction of the channel (2), wherein the channel (2) has a base (13), with the base (13) of the channel (2) having outlet openings (19) for the discharge of the liquid in the region of the second chamber (5), **characterized in that** the area of the openings (7, 8) in the dividing wall (3) amounts to a maximum of 30%, wherein the dividing wall (3) comprises at least one vertical section and the channel (2) has a channel width (17), with the first chamber (4) having a chamber width (20) which is defined by the spacing between the dividing wall (3) and the side wall (11) of the channel (2) and with the chamber width (20) of the first chamber (4) being smaller than the channel width (17), with the chamber width (20) being smaller than the calming path of the liquid flow.

2. A liquid distributor in accordance with claim 1, wherein the area of the openings (7, 8) in the dividing wall (3) amounts to a maximum of 10% particularly preferably a maximum of 5%.

3. A liquid distributor in accordance with one of the preceding claims, wherein the dividing wall (3) comprises at least one vertical section and the dividing wall (3) is in parallel with a side wall (11, 12) of the channel (2).

4. A liquid distributor in accordance with any one of the preceding claims,
wherein the channel (2) has a channel height (18), wherein the first chamber (4) has a first chamber height (14) and the second chamber (5) has a second chamber height (15), with the first chamber height (14) and the second chamber height (15) amounting to more than half the channel height (18), preferably to more than 75% of the channel height (18).

5. A liquid distributor in accordance with one of the claims 3 or 4, wherein the first chamber height (14) is substantially the same as the second chamber height (15).

6. A liquid distributor in accordance with any one of the preceding claims,
wherein the channel (2) has a channel length (16), with the first chamber (4) extending substantially along the channel length (16).

7. A liquid distributor in accordance with any one of the preceding claims,
wherein at least some of the openings (7, 8) are arranged offset to one another in a row.

8. A liquid distributor in accordance with any one of the preceding claims,
wherein the openings (7, 8) are formed as slits in the dividing wall (3).

9. A liquid distributor in accordance with any one of the claims 7 to 8, wherein the dividing wall (3) contains openings (8) which are adjacent to a base (13) of the channel (2).

10. A liquid distributor in accordance with any one of the claims 7 to 8, wherein the side wall (12) of the channel (2) contains outlet openings (19) in the region of the second chamber (5) for the discharge of the liquid.

11. A distributor apparatus comprising a main channel (28, 29) and a branch channel (30, 31), wherein a liquid distributor (1) in accordance with any one of the preceding claims is arranged in the main channel (28, 29) and/or in the branch channel (30, 31).

12. A separation column (25) comprising a distributor apparatus (26) on which a liquid distributor (1) in accordance with any one of the preceding claims is arranged.

13. Use of a liquid distributor (1) in accordance with any one of the preceding claims 1 to 10 for polymerizing liquids or for suspensions or emulsions which should not segregate.

## Revendications

1. Distributeur de liquide (1), incluant un canal (2) pour la réception d'un liquide, qui est subdivisé par une paroi de séparation (3) en une première chambre (2) et une seconde chambre (5), dans lequel un élément d'entrée (6) pour un liquide débouche dans la première chambre (4), de sorte que la première chambre (4) peut être remplie avec le liquide, dans lequel la première chambre (4) est reliée avec la seconde chambre (5) via des ouvertures (7, 8) qui sont ménagées dans la paroi de séparation (3), de sorte que le liquide est susceptible d'être distribué depuis la première chambre (4) via les ouvertures (7) dans la seconde chambre (5), dans lequel la première chambre (4) est agencée à côté de la seconde chambre (5) et la paroi de séparation (3) s'étend en direction longitudinale du canal (2), dans lequel le canal (2) comporte un fond (13) et le fond (13) du canal (2) contient dans la région de la seconde chambre (5) des ouvertures de sortie (19) pour la sortie du liquide, **caractérisé en ce que** la surface des ouvertures (7, 8) dans la paroi de séparation (3) s'élève au maximum à 30 %, la paroi de séparation (3) inclut au moins un tronçon vertical, et le canal (2) présente une largeur (17), et la première chambre (4) présente une largeur (20) qui est définie par la distance entre la paroi de séparation (3) et la paroi latérale (11) du canal (2), et la largeur (20) de la première chambre (4) est plus petite que la largeur (17) du canal, la largeur (20) de la chambre étant plus petite que le trajet de tranquillisation de l'écoulement de liquide.

2. Distributeur de liquide selon la revendication 1, dans lequel la surface des ouvertures (7, 8) dans la paroi de séparation (3) s'élève au maximum à 10 %, et de manière particulièrement préférée au maximum à 5 %.

3. Distributeur de liquide selon l'une des revendications précédentes, dans lequel la paroi de séparation (3) inclut au moins un tronçon vertical, et la paroi de séparation (3) est parallèle à une paroi latérale (11, 12) du canal (2).

4. Distributeur de liquide selon l'une des revendications précédentes, dans lequel le canal (2) présente une hauteur (18), la première chambre (4) présente une première hauteur (14) et la seconde chambre (5) présente une seconde hauteur (15), la première hauteur (14) et la seconde hauteur (15) s'élevant à plus de la moitié de la hauteur (18) du canal, et de préférence à plus de 75 % de la hauteur (18) du canal.

5. Distributeur de liquide selon l'une des revendications 3 ou 4, dans lequel la première hauteur (14) de la première chambre est sensiblement égale à la seconde hauteur (15) de la seconde chambre.

6. Distributeur de liquide selon l'une des revendications précédentes, dans lequel le canal (2) présente une longueur (16), et la première chambre (4) s'étend sensiblement le long de la longueur (16) du canal.

7. Distributeur de liquide selon l'une des revendications précédentes, dans lequel au moins une partie des ouvertures (7, 8) sont agencées dans une rangée ou en décalage les unes par rapport aux autres.

8. Distributeur de liquide selon l'une des revendications précédentes, dans lequel les ouvertures (7, 8) sont réalisées sous forme de fentes dans la paroi de séparation (3).

9. Distributeur de liquide selon l'une des revendications 7 et 8, dans lequel la paroi de séparation (3) contient des ouvertures (8) qui sont adjacentes à un fond (12) du canal (2).

10. Distributeur de liquide selon l'une des revendications 7 à 9, dans lequel la paroi latérale (12) du canal (12) contient, dans la région de la seconde chambre (5), des ouvertures de sortie (19) pour la sortie du liquide.

11. Dispositif distributeur incluant un canal principal (28, 29) et un canal ramifié (30, 31), dans lequel un distributeur de liquide (1) selon l'une des revendications précédentes est agencé dans le canal principal (28, 29) et/ou dans le canal ramifié (30, 31).

12. Colonne de séparation incluant un dispositif distributeur (26), sur laquelle est agencé un distributeur de liquide (1) selon l'une des revendications précédentes.

13. Utilisation d'un distributeur de liquide (1) selon l'une des revendications précédentes 1 à 10, pour des liquides qui se polymérisent ou pour des suspensions ou des émulsions qui ne doivent pas se séparer.
